# EUROPEAN PATENT APPLICATION

(11) **EP 4 570 842 A1**
(43) Date of publication of application: **18.06.2025**
(21) Application number: 23215812.1
(22) Date of filing: 12.12.2023
(51) Int. Cl.: C08G 18/62, C08G 18/73, C09D 5/00

(54) **SELF-CLEANING TWO-COMPONENT (2K) COATING**

(71) Applicant: Evonik Operations GmbH, 45128 Essen (DE)
(72) Inventor: CHONG, Yong Bing, 652453 Singapore (SG); CHEW,Kong Chin, 14007 Singapore (SG); ALBERT, Philipp, 79539 Lörrach (DE); NG, Jun-Hao, 640826 Singapore (SG)
(74) Representative: Evonik Patent Association

(57) **Abstract**

A two component (2K) coating composition comprising:
a) first component base formulation
20 -30 wt% of a polymeric binder selected from the group consisting of polyester polyol or acrylic polyol,
20-40 wt% organic solvent,
30-50 wt % of pigments and/or fillers,
1 - 2 wt% dispersant,
0 - 0.1 wt% catalyst,
0 - 5 wt% levelling agent, rheology modifier, defoamer, wetting agent and/or slip agents.

b) Second component
5-20 wt% of a crosslinker having reactivity to the polyol in component a),
1 - 6 wt% weight of a organosilicate compound represented by the following chemical structure

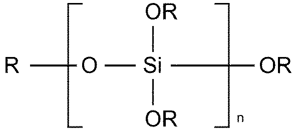

with R being an alkyl group with 1-10 carbon and n is between 1-60.

## Description

The present invention pertains to exterior protective coatings with improved dirt-pick-up properties.

US 11,214,705 discloses a thermosetting one component (1K) paint composition, paint finishing method, and method for producing painted articles that provides a resistance effect, together with good paint film properties such as water resistance and bending workability. The thermosetting paint composition comprises polyester resins, blocked aliphatic polyisocyanate, organotin and organosilicate. The 1K paint composition requires the use of blocked isocyanate and high temperature has to be applied to unblock the isocyanate. The temperature required to unblock the isocyanate is in the range of 150 °C to 230 °C. The high temperature limits the number of applications for this paint composition.

There is a high demand of self-cleaning coatings for numerous applications including buildings, constructions and other industrial markets. The use of self-cleaning coatings leads to various benefits such as less wastage of materials and lower cost and needs for maintenance. The current approach of adding hydrophobic additives into these coatings, however, did not improve the problem of poor dirt-pick-up properties.

It is therefore an object of the present invention to provide a coating composition in which the disadvantages of the prior art are at least reduced and which has self-cleaning properties and which can be cured at ambient or slightly elevated temperatures.

This object is achieved with a two component (2K) coating composition comprising:
a) First component base formulation
   20 -30 wt% of a polymeric binder selected from the group consisting of polyester polyol or acrylic polyol.
   20-40 wt% organic solvent.
   30-50 wt % of pigments and/or fillers
   1 - 2 wt% dispersant
   0 - 0.1 wt% catalyst
   0 - 5 wt% levelling agent, rheology modifier, defoamer, wetting agent and/or slip agents
b) Second component
   5 - 20 wt% of a crosslinker having reactivity to the polyol in component a).
   1 - 6 wt% weight of a organosilicate compound represented by chemical structure (I), 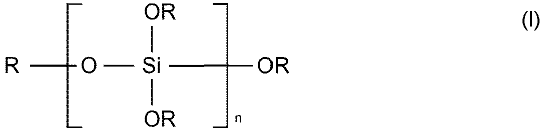
with R being an alkyl group with 1-10 carbon and n is between 1-60

With the inventive coating composition excellent dirt-pick-up properties can be achieved through creating a long lasting hydrophilic surface without having to apply high temperatures of 150 °C or even higher and thus allowing for applications that cannot undergo heat treatment during curing.

The self-cleaning properties of this two component coating composition will result in less cleaning and maintenance needed. The long term durability will also reduce the labor cost needed and minimize materials wastage, resulting in a more sustainable environment. Th two component coating composition according to the invention can be used as an ambient cured exterior protective coating, in which the self-cleaning properties will give better aesthetics as well as improved durability.

In order to achieve the unique properties of the two component coating composition according to the invention the organosilicate compound needs to migrate to the
the coating surface. Should hydrolysis of the organosilicate compound occur before application due to moisture in the composition, it will result in condensation and the organosilicate compound will not migrate to the coating surface.

Without wishing to be bound by theory it is assumed that the crosslinker acts as a moisture scavenger and protects the organosilicate from hydrolysis. Upon curing, the organosilicate migrates to the coating surface, hydrolyzes due to the moisture in the air and gives the coating its unique self-cleaning properties. This surprising effect is achieved at ambient or slightly elevated temperatures and does not require high temperatures of 150°C or above.

The presence of moisture in the coating composition does not erase the performance of the organosilicate compound as the presence of a crosslinker acts as a moisture scavenger and protect the alkoxy groups from being hydrolyzed.

The first component base formulation is mixed with the second component only right before application.

Surprisingly, the cured coating compositions according to the invention containing organosilicate do not reduce gloss.

In a preferred embodiment of the two component (2K) coating composition according to the invention the crosslinker in the second component is an isocyanate with 0.8-1.2 equivalents of isocyanate groups relative to the hydroxyl groups of the polyester polyol or acrylic polyol in the first component base formulation.

More preferably crosslinker in the second component is selected from the group consisting of hexamethylene diisocyanate, trimethylhexamethylene diisocyanate, dimer acid diisocyanate, isophorone diisocyanate, methylene diphenylmethane diisocyanate, toluene diisocyanate and xylylene diisocyanate.

The organosilicate compound in the second component that is represented by the chemical structure (I) 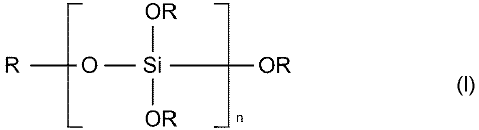 with R preferably being an alkyl group with 1-5 carbon and n is between 1-60

The organosilicate compound in the second component that is represented by the chemical structure (I) 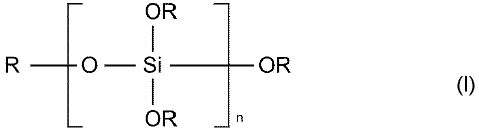 with R preferably being an alkyl group with 1-5 carbon and n is between 20-40

The organosilicate compound in the second component that is represented by the chemical structure (I) 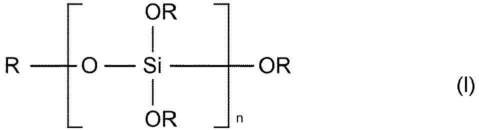 with R preferably being ethyl or methyl and n is preferably between 20 to 40.

The two component (2K) coating composition according to the invention comprises an organic solvent in the first component, said solvent is preferably selected from the group consisting of butyl acetate, ethyl acetate, toluene, xylene, methyl ethyl ketone, ethylene glycol, butyl alcohol, hexane and mixtures thereof.

The two component (2K) coating composition according to the invention comprises a catalyst in the first component as an optional ingredient. The use of a catalyst can further improve the dirt pick up properties. The skilled person can pick a catalyst that is known in the art e.g. organotin catalyst, specifically dibutyltin dilaurate. Other options are organozinc or organobismuth catalysts.

### Examples

### Example 1

### First component (base formulation):

Polyol: 20 wt%Acrylic polyol
Pigment: 43 wt% Titanium dioxide
Dispersant: 1 wt% Copolymer with acidic groups
Rheology modifier: 1 wt% Fumed silica
Solvent: 22 wt% Butyl acetate
Catalyst: Dibutyltin dilaurate 0 wt% or 0.1 wt% depending on the formulation (see table 1)

### Second component:

Crosslinker: 10.7 (10.4) wt% hexamethylene diisocyanate
Organosilicate: 3 (2.9) wt% methyl silicate and/or ethyl silicate depending on the formulation (see table 1) with n being 25

Coating compositions were produced by first mixing together the first component base formulation. The second component (crosslinker and organosilicate) was added into the first component before curing. It is also possible to add crosslinker and organosilicate separately into the first component.

**Table 1: Contents of coating composition 1 and coating compositions 2 to 5 according to the invention**

| | | **Coating composition** | | | | |
|---|---|---|---|---|---|---|
| **Content** | | 1 | 2 | 3 | 4 | 5 |
| Base formulation [g] | | 89.3 | 89.3 | 89.3 | 89.3 | 89.3 |
| Isocyanate [g] | | 10.7 | 10.7 | 10.7 | 10.7 | 10.7 |
| Catalyst [g] | | - | - | 0.1 | 0.1 | 0.1 |
| Organosilicate [g] | Methoxy | - | 3.0 | 3.0 | - | - |
| | Methoxy/Ethoxy | - | - | - | 3.0 | - |
| | Ethoxy | - | - | - | - | 3.0 |

Coating composition 1 is a comparative example without organosilicate compound.

### Example 2

Upon adding the second component into the first component the final coating was applied on a steel surface using a wire bar coater and cured under ambient conditions for 7 days.

**Table 2: Properties of the coating compositions 1 to 5 cured under ambient conditions**

| **Properties** | **1** | **2** | **3** | **4** | **5** |
|---|---|---|---|---|---|
| 6-months natural exposure (-dL) | 6.2 | 2.2 | 0.2 | 1.8 | 0.7 |
| 60° Gloss | 89 | 90 | 90 | 91 | 89 |
| 4 week water contact angle (°) | 81 | 67 | 56 | 60 | 52 |

Water contact angle was determined according to ASTM D7334 after the cured coating was left under ambient temperature for 4 weeks.

Gloss was determined according to ASTM D523. Surprisingly gloss is retained despite the addition of silicate. The cured coating compositions containing organosilicate do not lower the gloss.

The 6 months natural exposure test was carried out according to ASTM G7. 6 months natural exposure -dL determines the change in brightness of a specimen coated with a white coating. Dirt that accumulates on the sample coating causes the coating to become darker. This can be measured by spectrophotometer according to ASTM G7. Higher -dL values indicate a higher dirt pick up. Accordingly lower -dL values show lower dirt pick-up.

The self-cleaning performance indicated by a lower-dL is improved in the coating compositions according to the invention. Coating composition 2 not containing a catalyst has already a much lower -dL compared with coating composition 1 without organosilicate. The self-cleaning performance is further improved by addition of catalyst as shown in coating compositions 3 to 5.

### Example 3

Upon adding the second component into the first component the final coating was applied on a steel surface using a wire bar coater and cured 50°C for 30 minutes.

**Table 3: Properties of the coating compositions 1 to 5 cured at 50°C for 30 minutes**

| **Properties** | **1** | **2** | **3** | **4** | **5** |
|---|---|---|---|---|---|
| 6-months natural exposure (-dL) | 4.9 | 0.5 | 0.5 | 2.2 | 1.1 |
| 60° Gloss (GU) | 85 | 81 | 91 | 88 | 84 |
| 4 week water contact angle (°) | 81 | 58 | 34 | 55 | 79 |

Water contact angle, gloss and 6 months natural exposure was carried out as described in Example 2.

The results shown in table 3 self-cleaning performance indicated by a lower-dL is improved in coating compositions 2 to 5 according to the invention. Coating compositions 2 to 5 have a much lower -dL compared with coating composition 1 without organosilicate.

Increasing the curing temperature to 50 °C shortens the curing time significantly without any negative impact on dirt pick up properties or gloss.

### Example 4

### First component (base formulation):

For example 4 a white colour commercial base formulation based on acrylic polyol was used as is. Typically commercial base formulations for 2K coating formulations contain catalyst. No additional catalyst was added to the commercial base formulation.

### Second component:

Crosslinker: 14.9 (14.5) wt% hexamethylene diisocyanate
Organosilicate: 3 (2.9) wt% methyl silicate and/or ethyl silicate depending on the formulation (see table 1) with n being 25

The second component (crosslinker and organosilicate) was added into the first component before curing.

**Table 4: Contents of coating composition 6 and coating compositions 7 to 9 according to the invention**

| **Formulation (g)** | | | | | |
|---|---|---|---|---|---|
| **Composition** | | **6** | **7** | **8** | **9** |
| Base formulation | | 85.1 | 85.1 | 85.1 | 85.1 |
| Isocyanate | | 14.9 | 14.9 | 14.9 | 14.9 |
| Organosilicate | Methoxy | - | 3.0 | - | - |
| | Methoxy/Ethoxy | - | - | 3.0 | - |
| | Ethoxy | - | - | - | 3.0 |

Coating composition 6 is a comparative example without organosilicate compound.

### Example 5

Upon adding the second component into the first component the final coating was applied on a steel surface using a wire bar coater and cured under ambient conditions for 7 days.

**Table 5: Properties of coating compositions 6 to 9 cured under ambient conditions**

| **Properties** | **6** | **7** | **8** | **9** |
|---|---|---|---|---|
| 6-months natural exposure (-dL) | 11.0 | 5.3 | 1.9 | 2.1 |
| 60° Gloss (GU) | 93 | 86 | 87 | 88 |
| 4 week water contact angle (°) | 85 | 75 | 72 | 79 |

Measurement of Water contact angle, gloss and 6 months natural exposure was carried out as described in Example 2.

Addition of second component to a commercial base formulation lowers -dL and greatly reduces dirt pick up with minimal loss in gloss.

### Example 6

Upon adding the second component into the first component the final coating was applied on a steel surface using a wire bar coater and cured 50°C for 30 minutes.

**Table 6: Properties of the coating compositions 6 to 9 cured at 50°C for 30 minutes**

| **Properties** | **6** | **7** | **8** | **9** |
|---|---|---|---|---|
| 6-months natural exposure (-dL) | 12.0 | 1.4 | 0.5 | 1.3 |
| 60° Gloss (GU) | 90 | 87 | 88 | 87 |
| 4week water contact angle (°) | 85 | 66 | 76 | 75 |

Water contact angle, gloss and 6 months natural exposure was carried out as described in Example 2.

Increasing the curing temperature to 50 °C shortens the curing significantly and further improves the dirt pick up properties at the same time the addition of the second component has no significant effect on gloss.

## Claims

1. A two component (2K) coating composition comprising:
a) first component base formulation
20 -30 wt% of a polymeric binder selected from the group consisting of polyester polyol or acrylic polyol,
20-40 wt% organic solvent,
30-50 wt % of pigments and/or fillers,
1 - 2 wt% dispersant,
0 - 0.1 wt% catalyst,
0 - 5 wt% levelling agent, rheology modifier, defoamer, wetting agent and/or slip agents;
b) Second component
5-20 wt% of a crosslinker having reactivity to the polyol in component a),
1 - 6 wt% weight of a organosilicate compound represented by the following chemical structure 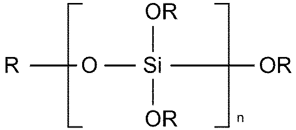
with R being an alkyl group with 1-10 carbon and n is between 1-60.

2. A two component (2K) coating composition according to claim 1, **characterized in that** the crosslinker in the second component is an isocyanate with 0.8-1.2 equivalents of isocyanate groups relative to the hydroxyl groups of the polyester polyol or acrylic polyol in the first component base formulation.

3. A two component (2K) coating composition according to claim 1, **characterized in that** the crosslinker in the second component is selected from the group consisting of hexamethylene diisocyanate, trimethylhexamethylene diisocyanate, dimer acid diisocyanate, isophorone diisocyanate, methylene diphenylmethane diisocyanate, toluene diisocyanate and xylylene diisocyanate.

4. A two component (2K) coating composition according to claim 1, **characterized in that** R in the organosilicate compound is ethyl or methyl.

5. A two component (2K) coating composition according to claim 1, **characterized in that** n in the organosilicate compound is between 20 to 40.

6. A two component (2K) coating composition according to claim 1, **characterized in that** the solvent is selected from the group consisting of butyl acetate, ethyl acetate, toluene, xylene, methyl ethyl ketone, ethylene glycol, butyl alcohol and hexane.
